# EUROPEAN PATENT APPLICATION

(11) **EP 3 572 806 A1**
(43) Date of publication of application: **27.11.2019**
(21) Application number: 17899446.3
(22) Date of filing: 06.03.2017
(51) Int. Cl.: G01N 29/04, G01N 29/22, G01N 29/265

(54) **ULTRASONIC FLAW DETECTION DEVICE AND ULTRASONIC FLAW DETECTION METHOD**

(71) Applicant: Nippon Steel Corporation, Tokyo 100-8071 (JP)
(72) Inventor: OGAWA, Takahisa, Tokyo 100-8071 (JP)
(74) Representative: Vossius & Partner Patentanwälte Rechtsanwälte mbB
(86) International application number: PCT/JP2017/008789
(87) International publication number: WO 2018/163248

(57) **Abstract**

An ultrasonic flaw detector for performing flaw detection of a circumferential defect on a surface of a steel pipe is configured such that only a surface wave probe configured to transmit a surface wave to the surface of the steel pipe is provided as a probe for transmitting an ultrasonic wave to the steel pipe and a position of the surface wave probe is fixed in a state where a surface wave transmission direction of the surface wave probe is in parallel with a pipe axis direction of the steel pipe.

## Description

### TECHNICAL FIELD

The present invention relates to an ultrasonic flaw detector and an ultrasonic flaw detection method that detect circumferential defects such as circumferential flaws occurring on a surface of a steel pipe.

### BACKGROUND ART

In recent years, development is made in consideration of 3R technologies (reduce, reuse, recycle) for various materials from the viewpoint of environmental problems. In the iron and steel field, energy saving is realized by weight saving through the application of the reduce technology by increasing the strength. However, generally, the increasing the strength of the steel material is likely to cause occurrence of flaws during processing such as plastic working, resulting in difficulty in ensuring the material property. From the viewpoint of ensuring the material property of the steel material, various measures are performed and, as a part of them, it is necessary to accurately inspect the flaw and break of the steel material. For example, to inspect the presence or absence of defects such as the flaw and break formed on the steel pipe surface, it is general to perform a nondestructive flaw detection inspection utilizing an ultrasonic wave.

As such a flaw detection inspection method, Patent Document 1 discloses a method of inspecting the presence or absence of a defect on a steel pipe by transmitting an ultrasonic wave to the inside of the steel pipe (inside a bulk of the steel pipe) using an angle probe and receiving the ultrasonic wave reflected by the steel pipe (hereinafter, "echo"). The ultrasonic wave in Patent Document 1 is a transverse wave with no mode conversion on a flaw detection surface, a so-called SH wave, and propagates to a defect part of the steel pipe while being repeatedly reflected between the surface (outer surface) and the rear surface (inner surface) of the steel pipe.

Patent Document 2 discloses that a flaw detection inspection is performed by transmitting an ultrasonic wave propagating through a surface of a steel pipe (hereinafter, "surface wave"). In a flaw detection method of Patent Document 2, a surface wave probe is arranged so that the transmission direction of the surface wave becomes oblique to an axial center direction of an inspected material, and the presence or absence of a defect of the steel pipe is inspected by detecting an echo of the spirally propagating surface wave.

### PRIOR ART DOCUMENT

### PATENT DOCUMENT

Patent Document 1: Japanese Laid-open Patent Publication No. 2004-3996
Patent Document 2: Japanese Laid-open Patent Publication No. 2013-124919

### SUMMARY OF THE INVENTION

### PROBLEMS TO BE SOLVED BY THE INVENTION

The flaw detection method using the SH wave as in Patent Document 1 needs to make the transverse wave incident on the steel pipe from the probe, but in the case of performing the flaw detection inspection by an immersion method, the transverse wave cannot be propagated through water or oil which is normally used as a medium between the probe and the steel pipe, so that it is necessary to use a medium high in viscosity such as glycerin. In the case of using the medium high in viscosity, if the medium remains on the steel pipe surface, there is a concern that rust or the like occurs on the steel pipe, so that it is necessary to wipe out the medium on the steel pipe surface after the flaw detection inspection. However, the wiping is not easy because the viscosity of the medium is high, and it takes much time to sufficiently wipe out the medium. In addition to this, the medium high in viscosity is extremely high in temperature dependency and changes in sensitivity of detecting the flaw when the same medium is used through the year. When the detection sensitivity decreases, there is a concern that the flaw of the steel pipe cannot be detected. In order to avoid such a situation, it is conceivable that the medium is changed according to the season and time zone when the flaw detection inspection is performed so as to make the detection sensitivity almost constant, which increases the labor of managing a plurality of kinds of media and possibly leads to erroneous selection of a medium different from a suitable medium.

On the other hand, in the flaw detection method using the SH wave can be performed also by a so-called dry coupling mode of pressing the probe directly against the surface of the steel pipe. However, the SH wave has a property of hardly entering the inside of the steel pipe, so that in pressing the probe against the surface of the steel pipe, it is necessary to press the probe strongly and firmly with a force 10 times or more that in the flaw detection inspection of the normal dry coupling mode when likening it to the feeling of pressing the probe against the skin of a human. Therefore, in performing the flaw detection inspection, it is necessary to confirm whether the probe is sufficiently pressed against the steel pipe surface at a level causing no problem in the flaw detection accuracy, resulting in an increase in flaw detection inspection time.

Besides, in the case of the flaw detection method using the ultrasonic wave transmitted from the angle probe such as the SH wave, when the frequency of the ultrasonic wave is low, the defect of the steel pipe cannot possibly be detected. However, even if the frequency of the ultrasonic wave is increased, the attenuation factor of the ultrasonic wave in the bulk of the steel pipe increases, resulting in the difficulty in detecting the circumferential defect having a small depth in the steel pipe surface. In this case, it is necessary to repeatedly perform the flaw detection inspection, resulting in an increase in flaw detection inspection time.

Unless the flaw detection inspection method using the SH wave performs the flaw detection inspection by a suitable method, the flaw detection accuracy keeps decreasing, whereas when trying to perform the flaw detection inspection by the suitable method, there is a problem of causing an increase in flaw detection inspection time. Therefore, it is desired to perform the flaw detection inspection by a method completely different from the flaw detection method using the SH wave.

On the other hand, a flaw detection object in the flaw detection inspection in Patent Document 2 is assumed to be a bar steel or a wire rod in consideration of the structure of the flaw detector and the surface wave transmission direction disclosed in Patent Document 2, and the kind of the defect to be detected is a defect along the longitudinal direction of the surface of the bar steel or the wire rod. In other words, the flaw detection for the circumferential defect on the steel pipe surface is not in consideration. When using the flaw detection method in Patent Document 2 for the flaw detection inspection for the circumferential defect on the steel pipe surface, the surface wave spirally traveling through the steel pipe surface does not possibly come upon the circumferential defect on the steel pipe surface, and oversight of the detection for the circumferential defect possibly occurs. Therefore, in order to prevent the omission of the detection for the circumferential defect, the measure such as performance of the flaw detection inspection again with the steel pipe rotated is conventionally necessary, resulting in increase in flaw detection inspection time and decrease in productivity of the steel pipe.

### MEANS FOR SOLVING THE PROBLEMS

The present invention has been made in consideration of the above circumstances, and its object is to shorten the flaw detection inspection time to improve the productivity in the flaw detection inspection for the circumferential defect on the steel pipe surface.

The present inventors paid attention on the diffraction phenomenon of the surface wave propagating through the steel pipe surface and have acquired knowledge that the presence or absence of the circumferential defect on the whole circumference of the steel pipe by the diffracted surface wave when the surface wave is transmitted in a state of being parallel with the pipe axis direction.

The present invention solving the above problem is an ultrasonic flaw detector for performing flaw detection of a circumferential defect on a surface of a steel pipe, wherein only a surface wave probe configured to transmit a surface wave to the surface of the steel pipe is provided as a probe for transmitting an ultrasonic wave to the steel pipe, and wherein a position of the surface wave probe is fixed in a state where a surface wave transmission direction of the surface wave probe is in parallel with a pipe axis direction of the steel pipe.

Besides, the present invention according to another viewpoint is an ultrasonic flaw detection method for performing flaw detection of a circumferential defect on a surface of a steel pipe, wherein flaw detection is performed on the steel pipe using only a surface wave probe configured to transmit a surface wave to the surface of the steel pipe as a probe for transmitting an ultrasonic wave to the steel pipe by transmitting the surface wave from the surface wave probe to the surface of the steel pipe in a state where a surface wave transmission direction of the surface wave probe is in parallel with a pipe axis direction of the steel pipe.

The flaw detection inspection according to the present invention can perform the flaw detection on the whole circumference of the steel pipe by transmitting the surface wave in a direction parallel with the pipe axis at an arbitrary position on the steel pipe surface. In other words, it is unnecessary to rotate the steel pipe during the flaw detection inspection of the steel pipe, so that the flaw detection inspection time can be shortened.

### EFFECT OF THE INVENTION

According to the present invention, a flaw detection inspection time can be shortened to improve the productivity in a flaw detection inspection for a circumferential defect on a steel pipe surface.

### BRIEF DESCRIPTION OF THE DRAWINGS

[FIG. 1] A perspective view illustrating a schematic configuration of an ultrasonic flaw detector according to an embodiment of the present invention.
[FIG. 2] A cross-sectional view taken along Z-Z in FIG. 1.
[FIG. 3] A view illustrating an appearance at the time of surface wave transmission according to the embodiment of the present invention.
[FIG. 4] A cross-sectional view taken along Y-Y in FIG. 3.
[FIG. 5] A perspective view illustrating a schematic configuration of an ultrasonic flaw detector according to another embodiment of the present invention.
[FIG. 6] A chart illustrating a signal level at each position when the position at which a surface wave probe is pressed against the surface of the steel pipe was changed along the circumferential direction of the steel pipe.
[FIG. 7] A graph illustrating variations in signal level when the flaw detection inspection was repeatedly performed at the same position, pressing the surface wave probe against a steel pipe having a circumferential defect.

### MODES FOR CARRYING OUT INVENTION

Hereinafter, embodiments of the present invention will be explained referring to the drawings. Note that in the description and the drawings, the same codes are given to components having substantially the same functional configurations to omit duplicated explanation.

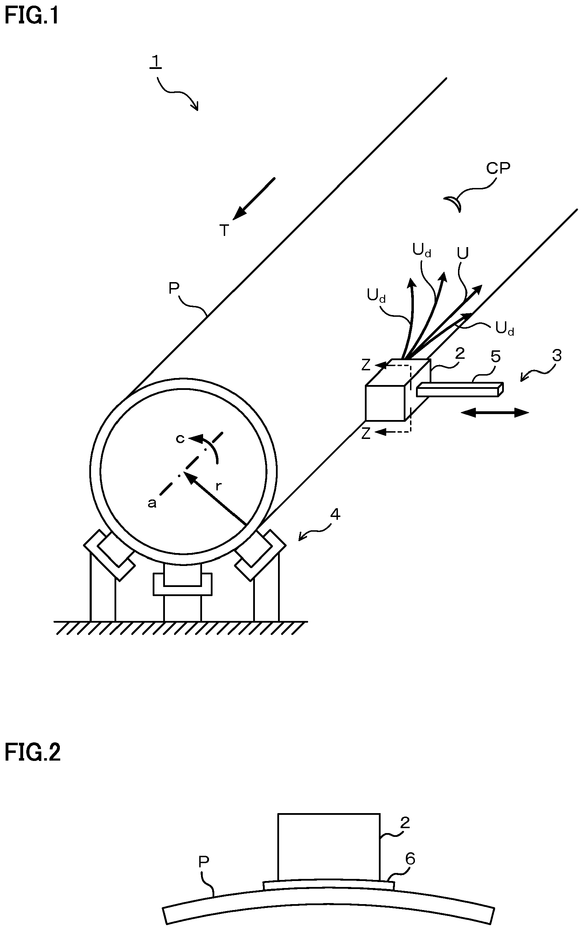

An ultrasonic flaw detector 1 according to this embodiment includes, as illustrated in FIG. 1, a surface wave probe 2 which transmits a surface wave U to the surface of a steel pipe P, a probe moving mechanism 3 which moves the surface wave probe 2 in a radial direction r of the steel pipe P, and a steel pipe conveying mechanism 4 which conveys the steel pipe P along a conveying direction T. Further, a flaw along a circumferential direction c as a circumferential defect (hereinafter "flaw part CP") is formed on the surface of the steel pipe P.

The probe moving mechanism 3 includes a probe support member 5 which supports the surface wave probe 2. The surface wave probe 2 is fixed to the probe support member 5 in a state where the transmission direction of the surface wave U is parallel with a pipe axis direction *a* of the steel pipe P. Note that though the surface wave probe 2 is fixed so that the surface wave U is transmitted toward the upstream side in the conveying direction T of the steel pipe P in this embodiment, the surface wave probe 2 may be fixed so that the surface wave U is transmitted toward the downstream side in the conveying direction T. Besides, the surface wave probe 2 employed in this embodiment is a so-called transmission and reception integral type surface wave probe, and includes a transmission part (not illustrated) which transmits the surface wave U to the surface of the steel pipe P and a reception part (not illustrated) which receives an echo reflected by the flaw part CP on the surface of the steel pipe P.

As illustrated in FIG. 2, an acrylic wedge 6 in contact with the surface of the steel pipe P is attached to the lower surface of the surface wave probe 2, and the ultrasonic flaw detector 1 is configured to perform a dry coupling mode flaw detection inspection. The wedge 6 according to this embodiment is a plate-shaped member having a shape capable of coming into close contact with the surface of the steel pipe P, and curvatures of the wedge 6 and the surface of the steel pipe P are almost the same. The shape of the wedge 6 is different in optimal shape depending on the outside diameter of the steel pipe P, so that when performing the flaw detection inspection, the wedge 6 is appropriately replaced with a wedge 6 suitable for the outside diameter of a steel pipe P being a flaw detection object. Note that the wedge 6 is formed of acrylic in this embodiment, but the material of the wedge 6 is not limited to this but may be another material as long as it can propagate the surface wave U.

It is not essential to attach the wedge 6 to the surface wave probe 2, but the provision of the wedge 6 as in this embodiment can increase the contact area between the surface wave probe 2 and the steel pipe P to thereby facilitate the propagation of the surface wave U between the surface wave probe 2 and the steel pipe P. This also makes it easy to detect the echo reflected by the flaw part CP to improve the flaw detection accuracy.

The ultrasonic flaw detector 1 according to this embodiment is configured as described above. Next, an ultrasonic flaw detection method using the ultrasonic flaw detector 1 will be explained.

First, the steel pipe P manufactured by a conventionally-known method is conveyed to a flaw detection inspection area where the ultrasonic flaw detector 1 is installed. On the surface of the steel pipe P, the flaw part CP exists as illustrated in FIG. 1. Subsequently, the surface wave probe 2 is moved in the radial direction r of the steel pipe P, and the surface wave probe 2 is pressed against the steel pipe P. In this state, the surface wave U is transmitted from the surface wave probe 2 toward the surface of the steel pipe P. Since the surface wave probe 2 is fixed in a state where the transmission direction of the surface wave U is parallel with the pipe axis direction *a* as described above, the surface wave U transmitted from the surface wave probe 2 travels in parallel with the pipe axis direction *a*.

The surface wave U transmitted from the surface wave probe 2 at this time is diffracted while radially spreading on the steel pipe surface. Therefore, a diffracted surface wave (hereinafter "diffracted surface wave U_{d}") propagates in a manner to wind around the steel pipe P. Then, the diffracted surface wave U_{d} reaches the flaw part CP existing on the steel pipe P and is reflected here. The echo of the reflected diffracted surface wave U_{d} goes toward the surface wave probe 2 in a manner to travel back along the path where the diffracted surface wave U_{d} has traveled. Then, the echo of the diffracted surface wave U_{d} reaches the reception part (not illustrated) of the surface wave probe 2, and the echo is detected there, whereby the existence of the flaw part CP on the surface of the steel pipe P can be confirmed. Note that when no flaw part CP exists, no echo is detected because there is no portion where the diffracted surface wave U_{d} is reflected.

According to the flaw detection method in this embodiment, the surface wave U is transmitted in a state where the surface wave transmission direction is parallel with the pipe axis direction *a*, thereby enabling detection of the circumferential defect existing at any position in the circumferential direction of the steel pipe P. In other words, it is unnecessary to perform the flaw detection inspection many times with the steel pipe P being rotated in the flaw detection inspection, thus making it possible to greatly shorten the flaw detection inspection time. This enables improvement in productivity of the steel pipe P.

Further, since only the surface wave probe 2 is used as the probe which transmits the ultrasonic wave in the flaw detection method in this embodiment, the noise in the flaw detection inspection decreases to facilitate the detection of the echo. This improves the flaw detection accuracy.

Note that the outside diameter of the steel pipe P being the flaw detection object is not particularly limited. However, taking the specifications of the surface wave probe 2 generally available at present into consideration, the outside diameter of the steel pipe P is preferably 2000 mm or less. With 2000 mm or less, the flaw detection accuracy can be improved, and even a fine defect can be easily detected. Further, when the outside diameter is 300 mm or less, the flaw detection accuracy is further improved. A more preferable outside diameter is 150 mm or less. The lower limit value of the outside diameter of the steel pipe P is not particularly limited as long as the outside diameter allows the transmission and reception of the surface wave U by the surface wave probe 2. Further, the wall thickness of the steel pipe Pis preferably 1.5 to 15 mm.

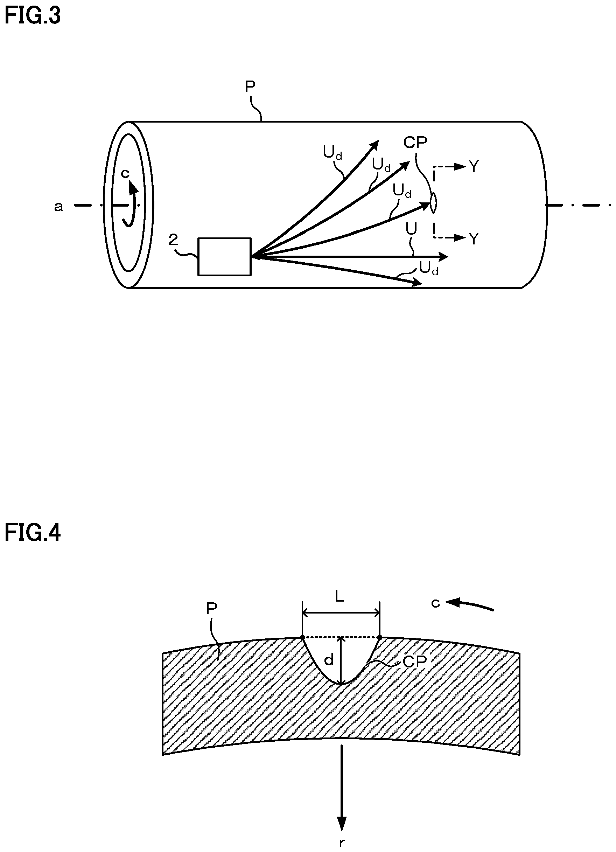

Further, the flaw detection method as in this embodiment is excellent in detecting the circumferential defect having a defect depth d illustrated in FIG. 4 of 0.05 mm or more. When the defect depth d is 0.1 mm or more, the detection of the circumferential defect become easier. In addition, according to the flaw detection method in this embodiment, it is also possible to detect a fine defect having a defect depth d of 0.5 mm or less which cannot be detected by the conventional flaw detection method. Note that the "defect depth d" means the length in the radial direction r from a reference plane to the bottom of a circumferential defect part in the case of assuming that the outer peripheral surface of the steel pipe P is the reference plate in a sectional view vertical to the pipe axis direction *a* as in FIG. 4.

Further, the flaw detection method as in this embodiment is excellent in detecting a circumferential defect having a defect length L of the circumferential defect of 0.1 mm or more. When the defect length L is 0.2 mm or more, the detection of the circumferential defect become easier. In addition, according to the flaw detection method in this embodiment, it is also possible to detect a fine defect having a defect length L of 5 mm or less which cannot be detected by the conventional flaw detection method. Note that the "defect length L" of the circumferential defect means the distance between boundary points of the outer peripheral surface of the steel pipe P and the circumferential defect part in a sectional view vertical to the pipe axis direction *a* as in FIG. 4.

Though the dry coupling method of performing flaw detection by pressing the surface wave probe 2 against the surface of the steel pipe P is used in the flaw detection method in this embodiment, an immersion method of performing flaw detection while supplying a medium such as water, oil or the like between the surface wave probe 2 and the surface of the steel pipe P may be used. In the case of performing the flaw detection by the immersion method, it is preferable to bring the surface wave probe 2 closer to the surface of the steel pipe P in order to improve the flaw detection accuracy. However, in the case of using the dry coupling method, the flaw detector can be made in a simpler structure and the flaw detection inspection can be more easily performed because the handling of the medium is unnecessary.

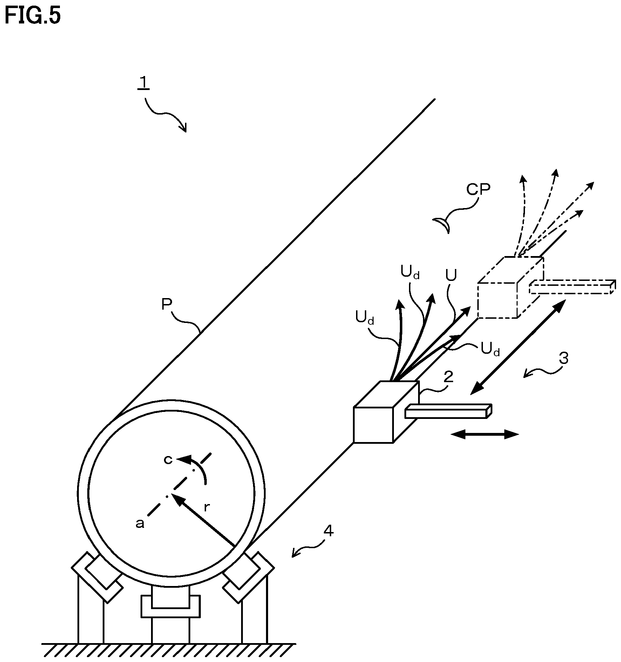

Besides, though the flaw detection inspection of the steel pipe P is performed by fixing the position of the surface wave probe 2 and moving the steel pipe P in the conveying direction T in this embodiment, the surface wave probe 2 may be moved along the pipe axis direction *a*. For example, a mechanism which moves the surface wave probe 2 along the pipe axis direction *a* may be further provided in the probe moving mechanism 3 as in FIG. 5 so that the surface wave probe 2 is moved along the pipe axis direction *a* while transmitting the surface wave U.

Besides, though the flaw detection inspection is performed using the transmission and reception integral type surface wave probe 2 in this embodiment, the flaw detection inspection may be performed using a transmission surface wave probe (not illustrated) having a transmission function which transmits the surface wave U and a reception surface wave probe (not illustrated) having a reception function which receives the echo. In this case, the transmission surface wave probe and the reception surface wave probe may be arranged, for example, on a straight line along the pipe axis direction *a*. In the case where the flaw part CP exists between the transmission surface wave probe and the reception surface wave probe, the surface wave U transmitted from the transmission surface wave probe attenuates at the flaw part CP on the surface of the steel pipe P, and the reception surface wave probe detects that the surface wave U has attenuated and thereby can confirm the presence or absence of the flaw part CP. However, for composing a flaw detector in a simpler structure, it is preferable to use the transmission and reception integral type surface wave probe.

Besides, though the flaw detection inspection is performed by the ultrasonic flaw detector 1 in this embodiment, an operator himself/herself may carry out the flaw detection inspection using the surface wave probe 2. In this case, the operator carries out the flaw detection inspection by pressing the surface wave probe 2 against the surface of the steel pipe P or, in the case of the immersion method, bringing the surface wave probe 2 closer to the surface of the steel pipe P. Also in this case, the flaw detection inspection of the whole circumference of the steel pipe P can be carried out without rotating the steel pipe P, by transmitting the surface wave U in a manner that the transmission direction of the surface wave U becomes parallel with the pipe axis direction *a* of the steel pipe P.

Preferred embodiments of the present invention have been described above, but the present invention is not limited to the embodiments. It should be understood that various changes and modifications are readily apparent to those skilled in the art within the scope of the technical thought as set forth in claims, and those should also be covered by the technical scope of the present invention.

### EXAMPLES 1

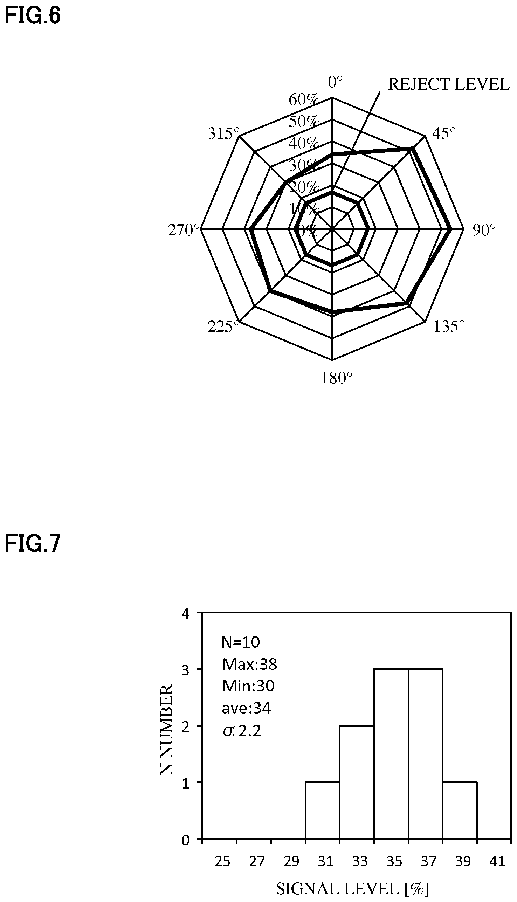

The flaw detection inspection according to the present invention was performed on a steel pipe having a circumferential flaw occurred on the surface, by pressing the surface wave probe against the steel pipe surface in the state where the transmission direction of the surface wave became parallel with the pipe axis direction. The outside diameter of the steel pipe being the flaw detection object is 34.0 mm and the wall thickness thereof is 4.0 mm. Further, only the transmission and reception integral type surface wave probe was used as the probe transmitting the ultrasonic wave, and the surface wave probe capable of transmitting the ultrasonic wave of a frequency of 2 MHz and a directional angle of 20° was used. In Example 1, the position at which the surface wave probe was pressed was changed along the circumferential direction of the steel pipe, and the signal level at each position was recorded. The result is illustrated in FIG. 6.

In FIG. 6, the position at which the surface wave probe was pressed first is a reference position (0°), and the numerical value of the angle (hereinafter "circumferential angle") illustrated in FIG. 6 indicates, in a sectional view vertical to the pipe axis direction, the angle formed between the reference position, the pipe axis and the position at which the surface wave probe moved in circumferential directions was pressed. In Example 1, the signal level was recorded at positions obtained by changing the position at which the surface wave probe was pressed by 45° each from the reference position (0°). A "reject level" indicated in FIG. 6 means the minimum signal level which is never mixed into noise in the flaw detection inspection. When a signal level lower than the reject level is detected, the circumferential defect such as a flaw cannot possibly be detected accurately.

As illustrated in FIG. 6, even if the surface wave probe is pressed at any position in the circumferential direction of the steel pipe, the signal level exceeds the reject level. In other words, by the flaw detection method according to the present invention, the circumferential flaw existing on the steel pipe can be appropriately detected.

### EXAMPLES 2

Next, the flaw detection inspection was repeatedly performed 10 times on the steel pipe used in Example 1 at the same position without changing the position at which the surface wave probe was pressed. Then, the signal level in each flaw detection inspection was measured and variations in the signal level were recorded. The result is illustrated in FIG. 7.

As illustrated in FIG. 7, in Example 2, the maximum signal level was 38% and the minimum signal level was 30%, and the difference between them was 8%. The position at which the surface wave probe was pressed where the signal level became lowest in Example 1 was a position having a circumferential angle of 315° as illustrated in FIG. 6, and the signal level at this time was about 20%. Therefore, even if assuming that the signal level is the maximum signal level and when 8% being the minimum signal level in Example 2 is subtracted from the signal level, a signal level exceeding the reject level is sufficiently ensured. In short, it is found that according to the results in Example 1 and Example 2, the circumferential defect of the steel pipe can be appropriately detected even taking the variations in signal level into consideration.

### EXAMPLES 3

Next, a plurality of steel pipes different in outside diameter of the steel pipe and in size (the defect depth d, the defect length L illustrated in FIG. 4) of the flaw as the circumferential defect were prepared, and the flaw detection inspection was performed on each of the steel pipes. Specifically, the signal level was repeatedly measured at the position at which the surface wave probe was pressed where the signal level became lowest in the circumferential direction of the steel pipe, and the minimum signal level was recorded. Then, based on the magnitude of the minimum signal level, the flaw detection accuracy was graded on a four-point scale. "Grade A" indicates the case where the signal level greatly exceeds the reject level and the flaw detection accuracy is extremely high. "Grade B" indicates the case where the signal level is lower than that in the case of Grade A but the flaw detection accuracy is sufficiently high. "Grade C" indicates the case where the signal level is lower than that in the case of Grade B but the flaw detection accuracy is high. "Grade D" indicates the case where the signal level is lower than the reject level and the flaw cannot possibly be detected. The grading result is listed in the following Table 1.

**[Table 1]**

| No. | STEEL PIPE OUTSIDE DIAMETER [mm] | FLAW | | ECHO INTENSITY (MINIMUM) | GRADE |
|---|---|---|---|---|---|
| | | DEFECT DEPTH [mm] | DEFECT LENGTH [mm] | | |
| 1 | 31.8 | 1.50 | 2.8 | 30 | B |
| 2 | 31.8 | 0.05 | 4.0 | 22 | C |
| 3 | 31.8 | 1.00 | 3.0 | 25 | C |
| 4 | 50.8 | 2.00 | 3.0 | 35 | B |
| 5 | 50.8 | 3.00 | 3.3 | 40 | A |
| 6 | 114.3 | 2.50 | 3.1 | 35 | B |
| 7 | 114.3 | 3.00 | 3.5 | 42 | A |

As listed in Table 1, in Example 3, the signal level exceeds the reject level in all of the steel pipes different in outside diameter and in size (the defect depth d, the defect length L), showing that the circumferential defect of the steel pipe can be appropriately detected. The case where the grade is "D" does not exist in Example 3, thus by the flaw detection method according to the present invention, it is presumed that even for a steel pipe having other circumferential defects, the circumferential defects can be detected without any problem as long as it is a steel pipe having the specifications capable of propagating the surface wave. In particular, only the surface wave probe is used as the probe which transmits the ultrasonic wave in the flaw detection method according to the present invention, so that noise when detecting the echo decreases. This contributes to the improvement in the flaw detection accuracy of the steel pipe and thereby facilitates the detection of the echo.

### INDUSTRIAL APPLICABILITY

The present invention is applicable to flaw detection inspection for a circumferential defect on a steel pipe surface. The present invention is applicable to the flaw detection inspection of an electric resistance welded steel pipe, a forge-welded steel pipe, and a seamless steel pipe without particular limitation of the kind or use of the steel pipe.

### EXPLANATION OF CODES

- 1: ultrasonic flaw detector
- 2: surface wave probe
- 3: probe moving mechanism
- 4: steel pipe conveying mechanism
- 5: probe support member
- 6: wedge
- *a*: pipe axis direction of steel pipe
- c: circumferential direction of steel pipe
- CP: flaw part
- d: defect depth of circumferential defect
- L: defect length of circumferential defect
- P: steel pipe
- r: radial direction of steel pipe
- T: conveying direction of steel pipe
- U: surface wave
- U_{d}: diffracted surface wave

## Claims

1. An ultrasonic flaw detector for performing flaw detection of a circumferential defect on a surface of a steel pipe,
wherein only a surface wave probe configured to transmit a surface wave to the surface of the steel pipe is provided as a probe for transmitting an ultrasonic wave to the steel pipe, and
wherein a position of the surface wave probe is fixed in a state where a surface wave transmission direction of the surface wave probe is in parallel with a pipe axis direction of the steel pipe.

2. The ultrasonic flaw detector according to claim 1,
wherein a probe moving mechanism configured to move the surface wave probe along the pipe axis direction of the steel pipe is provided.

3. The ultrasonic flaw detector according to claim 1 or 2,
wherein a wedge having a shape in close contact with the surface of the steel pipe is attached to the surface wave probe.

4. The ultrasonic flaw detector according to any one of claims 1 to 3,
wherein the surface wave probe is a transmission and reception integral type surface wave probe.

5. The ultrasonic flaw detector according to any one of claims 1 to 4,
wherein a dry coupling mode flaw detection is performed.

6. The ultrasonic flaw detector according to any one of claims 1 to 5,
wherein a defect depth of the circumferential defect is 0.05 mm or more.

7. The ultrasonic flaw detector according to any one of claims 1 to 6,
wherein a defect length of the circumferential defect is 0.1 mm or more.

8. The ultrasonic flaw detector according to any one of claims 1 to 7,
wherein an outside diameter of the steel pipe is 2000 mm or less.

9. An ultrasonic flaw detection method for performing flaw detection of a circumferential defect on a surface of a steel pipe,
wherein flaw detection is performed on the steel pipe using only a surface wave probe configured to transmit a surface wave to the surface of the steel pipe as a probe for transmitting an ultrasonic wave to the steel pipe by transmitting the surface wave from the surface wave probe to the surface of the steel pipe in a state where a surface wave transmission direction of the surface wave probe is in parallel with a pipe axis direction of the steel pipe.

10. The ultrasonic flaw detection method according to claim 9,
wherein the flaw detection is performed on the steel pipe while moving the surface wave probe along the pipe axis direction of the steel pipe.

11. The ultrasonic flaw detection method according to claim 9 or 10,
wherein the flaw detection is performed on the steel pipe with a wedge having a shape in close contact with the surface of the steel pipe attached to the surface wave probe.

12. The ultrasonic flaw detection method according to any one of claims 9 to 11,
wherein the surface wave probe is a transmission and reception integral type surface wave probe.

13. The ultrasonic flaw detection method according to any one of claims 9 to 12,
wherein a dry coupling mode flaw detection of bringing the surface wave probe into contact with the steel pipe is performed.

14. The ultrasonic flaw detection method according to any one of claims 9 to 13,
wherein a defect depth of the circumferential defect is 0.05 mm or more.

15. The ultrasonic flaw detection method according to any one of claims 9 to 14,
wherein a defect length of the circumferential defect is 0.1 mm or more.

16. The ultrasonic flaw detection method according to any one of claims 9 to 15,
wherein an outside diameter of the steel pipe is 2000 mm or less.
